## Europäisches Patentamt

## European Patent Office

## Office européen des brevets

(11) Publication number: **0 177 230**
**B1**

(12) **EUROPEAN PATENT SPECIFICATION**

(45) Date of publication of patent specification: **01.06.88**

(21) Application number: **85306673.6**

(22) Date of filing: **19.09.85**

(51) Int. Cl.⁴: **B 60 N 1/00, B 60 N 1/08**

(54) A vehicle seat vibration isolator device.

(30) Priority: **28.09.84 GB 8424608**

(43) Date of publication of application:
**09.04.86 Bulletin 86/15**

(45) Publication of the grant of the patent:
**01.06.88 Bulletin 88/22**

(84) Designated Contracting States:
**DE FR GB NL SE**

(56) References cited:
**EP-A-0 019 399**
**US-A-3 100 617**

(73) Proprietor: **jmh HOLDINGS LIMITED**
**Stone Circle Road**
**Round Spinney Northampton NN3 4RS (GB)**

(72) Inventor: **Bates, Michael Edward**
**22 Stonehill Way**
**Brixworth Northamptonshire (GB)**

(74) Representative: **Taylor, Derek George et al**
**Mathisen, Macara & Co. The Coach House 6-8**
**Swakeleys Road**
**Ickenham Uxbridge UB10 8BZ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to a vehicle-seat vibration-isolator device designed to reduce the transmission of vibrations in the fore and aft direction from a vehicle to a vehicle seat.

Vibration isolator devices are well known in connection with vehicle seats and are frequently combined with a fore and aft position adjustment device which enables the seat occupant to slide the seat forwards or backwards and lock it at a selected position.

The slide rail device commony used in vibration isolators of the type under consideration comprises two slide rails fitting one within the other to form a generally square section assembly, the two rails being in metal to metal contact or engaging through some friction reducing means. The resulting friction between the two slide rails is normally quite high and this reduces the effectiveness of the vibration isolation.

Sometimes the vibration isolator device is combined with a fore-aft position adjuster in the form of two interconnected slide rails which may contain horizontally spaced rows of rotary bearings to reduce friction, with locking means for locking the two slide rails in any selected relative position. In this event the vibration isolator is formed in two relatively movable parts, one of which is secured to the upper one of the slide rails and the other part of which is secured to the seat with possibly very little friction reducing means between the two parts of the isolator.

According to the present invention there is provided a vehicle-seat vibration-isolator device comprising an inner slide rail, an outer slide rail which embraces the inner slide rail, rows of rotary bearings arranged to roll on guide paths on opposite sides of the device, (which opposite sides are upper and lower sides when the device is in use) between parallel-spaced portions of the inner and outer slide rails, and a vibration-isolator assembly comprising a first or intermediate support member secured to a first one of said slide rails, second and third outer support members secured to the second of said rails, on opposite sides of said intermediate support, a rod extending parallel to said rails through said intermediate support member, said second and third outer support members secured to and supporting opposite ends of said rod, and two spring devices disposed around the rod and located respectively between the outer support members and the intermediate support member and acting to oppose resiliently movement of the respective outer support members in a direction towards the intermediate support member.

In particular the distance between the two opposite sides of the device, in a longitudinal plane through the rows of bearings, is substantially greater than the distance between the other two sides of the device in a longitudinal plane perpendicular to the first plane.

The invention will now be particularly described with reference to the accompanying drawings in which:—

Figure 1 is a transverse section through the lower part of a vehicle seat and seat suspension showing slide rails for adjustiong the fore and aft position of the seat, and vibration-isolator devices located between the seat and slide rails;

Figure 2 is a side elevation of the seat of Figure 1 showing in greater detail the arrangement and construction of the vibration-isolator device;

Figure 3 is a plan view of the vibration-isolator device on a larger scale;

Figure 4 is a side elevation of the vibration-isolator device on the same scale as in Figure 3;

Figure 5 is a section through the vibration-isolator device along the line V—V of Figure 3;

Figure 6 is an end elevation of the device of Figure 3, and

Figure 7 is a section similar to that of Figure 6 but showing a vibration isolator device coupled to a fore-aft position adjuster device.

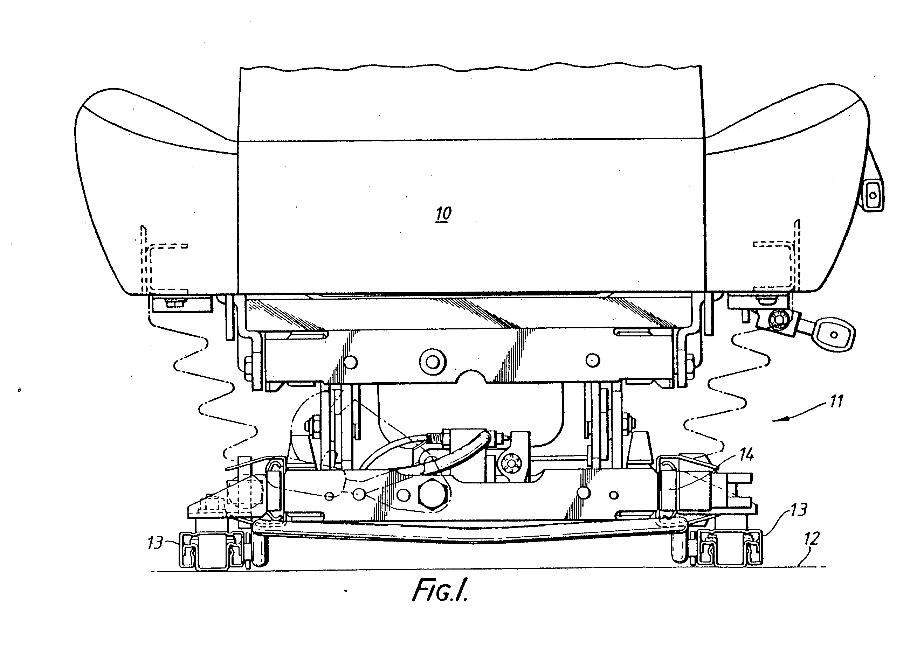

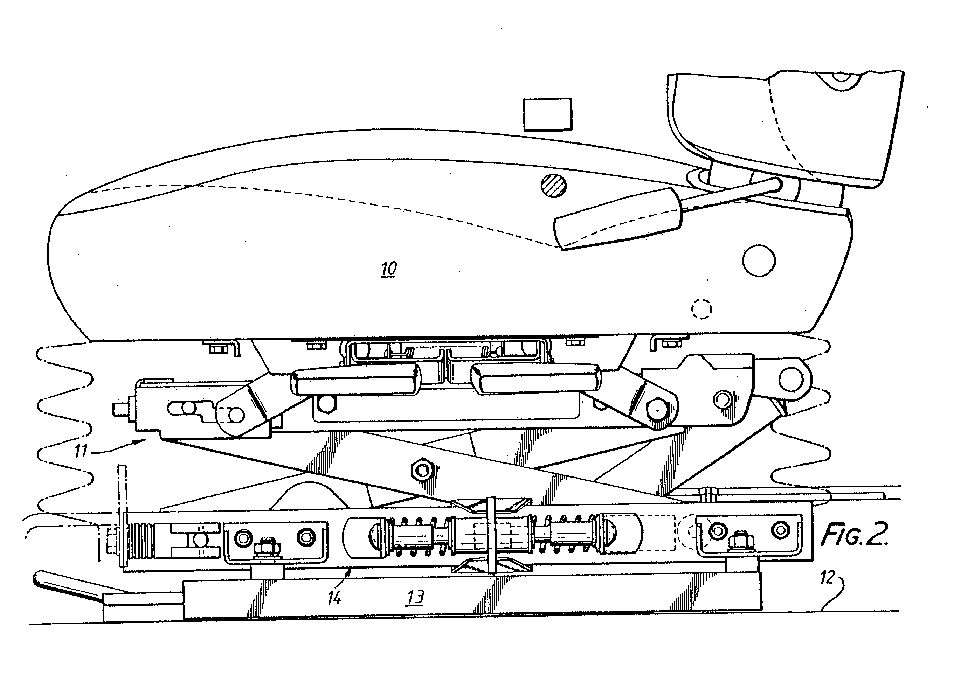

Figures 1 and 2 show a conventional seat cushion 10 mounted for upward and downward resilient movement on a scissors type seat suspension 11 which is attached to the floor 12 of a vehicle by fore-aft position adjustment slide rail assemblies 13 one of which includes locking means for locking the slide rails at a selected position.

In order to provide fore-aft vibration isolation, vibration-isolation devices have been incorporated in position-adjustment slide rail assemblies but since this involves further slide rail assemblies, such combined position-adjustment and vibration-isolator devices have been complex, costly and usually have relatively high friction which reduces the vibration isolation.

The present invention, which seeks to simplify the construction of the vibration-isolator device, provides a device 14 which comprises an inner slide rail 15 and an outer slide rail 16 which embraces the inner slide rail. An upper row 17 of rotary bearings is arranged to roll on a guide path formed on the upper side of an upper flange 15a of the inner slide rail 15 and on a guide path formed on the underside of an upper flange 16a of the outer slide rail 16. Similarly, a second or lower row of rotary bearings 18 is arranged to roll on a guide path formed on the underside of a lower flange 15b of the inner slide rail 15 and a guide path on the lower flange 16b of the outer slide rail 16. The distance between the two rows of bearings is very large in relation to the lateral width of the slide rails so that the slide rails have very high rigidity in a vertical plane.

Rigidity in a horizontal plane is less necessary since the two slide rails will be well supported and bear less load in a horizontal plane. The reference herein to rotary bearings is intended to include roller bearings, needle bearings or ball bearings, although in practice ball bearings will normally be used. Preferably the two rows of bearings are supported in spaced relationship in a bearing cage disposed between but spaced from the two slide rails.

The vibration-isolator device further comprises a vibration-isolator assembly 19 having a yoke 20 secured to the inner slide rail and extending around the outside of the outer slide rail and an intermediate support 21, in the form of a plate, fitted and secured within vertical slots in the opposite arms of the yoke 20 and extending perpendicular to the length of the slide rails. Two outer supports 22 are formed by brackets rigidly secured to the outer slide rail. Between these two brackets extends a rod 23 which at its opposite ends extends through the outer supports 22 and is secured by star-fix caps 24 fitted to the outer ends of the rod.

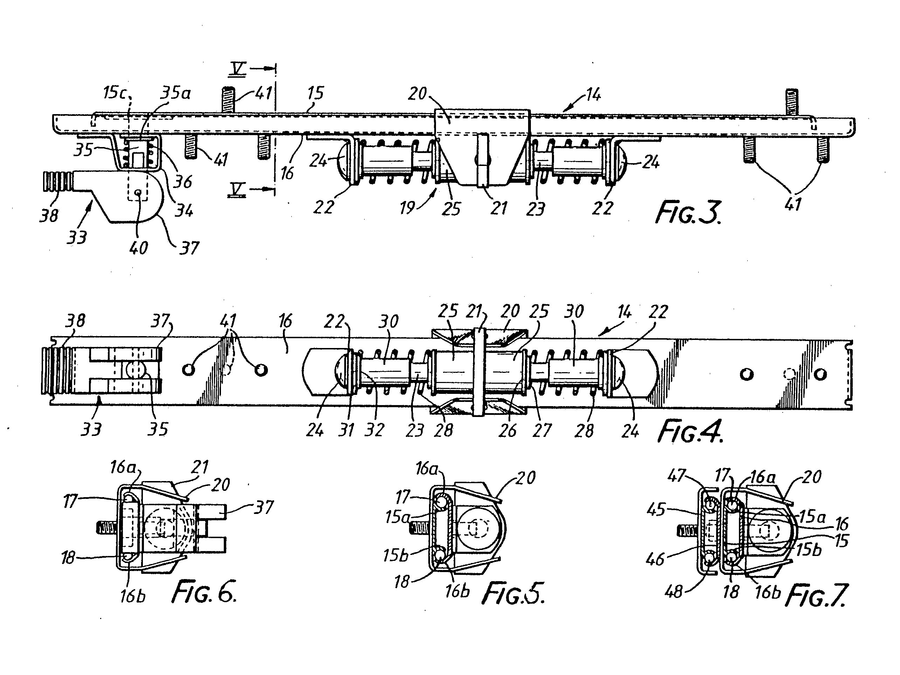

The rod extends in a loose fit through a hole in the intermediate support plate 21. Removably fitted to the rod on each side of the intermediate support 21, between this and the outer support 22, are a cylindrical rubber buffer 25, a first circular washer 26 abutting the outer end of the buffer, a second circular washer 27 of slightly smaller diameter than the first, which abuts the first washer, a helical spring 28 of which one end presses against the first washer 26 and is centred by the second washer 27 and a collar 30 having a flange 31 at its outer end. The collar fits around the rod 23 with the end flange 31 in engagement with the outer support 22, and is held resiliently against it by the outer end of the spring. A further washer 32 surrounding the collar serves to centre the outer end of the spring. As will be seen from Figure 4, the vibration damping means are identical on opposite sides of the intermediate support 21. Since all the parts of the assembly are movably mounted on the rod, and the rod itself is removably secured in the outer supports 22 by the removable star-fix caps 24, the whole assembly is easily disassembled for replacement or cleaning of the parts.

Adjacent the left hand end of the assembly as seen in Figure 3, is a locking device 33 which includes a bracket 34 welded to the outer slide rail. This bracket contains a pin 35 which extends through the bracket and through the outer slide rail into an aperture 15c in the inner slide rail 15 to lock the two slide rails 15, 16 together when vibration-isolation is not required. The pin 35 is biassed into its locked position by a spring 36 disposed within the bracket and engaging a flange 35a on the pin. A part of the pin which passes outwardly through a non-circular hole in the bracket, is of correspondingly non-circular shape to prevent rotation. The outer end of the pin contains a transverse hole. A U-section cam of generally semi-circular shape connected to a handle 38 is secured to the pin by a pivot rod 40 which extends through the handle and through the transverse hole in the pin and is disposed eccentrically with respect to the semi-circular cam 37. Accordingly, by rotation of the handle, the cam surface slides against the outer face of the bracket. As it does so, the distance between the pivot rod 40 and the outer surface of the bracket 34 is varied and accordingly the pin is drawn out of engagement with the inner slide rail 15. In the released position of the pin, the inner and outer slide rails are connected in the longitudinal direction only by the vibration-isolating assembly.

Pins 41 welded to the inner and outer slide rails to stand perpendicular thereto provide means for securing the slide rails to the seat suspension and to the fore-aft adjustment mechanism respectively.

If desired, the vibration-isolator device can be fitted to only one side of the seat, in which case a simple slide rail assembly, such as that shown in Figure 3 but without the vibration-damping assembly 19 and without the locking device 33, is fitted to the opposite side of the seat. These slide rail assemblies are shown in Figure 3 in association with conventional slide rail assemblies 42 for providing fore-aft position adjustment.

According to a further embodiment of the present invention, the slide rail construction shown in Figures 3—6 is modified to form a fore-aft position adjustment device by omitting the vibration-isolator assembly 19, and providing a plurality of apertures, like aperture 15c, evenly spaced apart along the length of the inner rail, for selective engagement by a locking device mounted on the outer rail. This locking device can be the same as, or similar to, the device 33 shown in Figure 3.

This fore-aft position adjustment device can be permanently secured, in parallel (i.e. back-to-back) relationship, to one of the slide rails of a vibration-isolator device having the construction shown in Figure 3 to form a combined position-adjustment and vibration-isolator device as shown in Figure 7.

In Figure 7, the vibration-isolator device shown on the right is substantially as shown in Figure 6. The position-adjustment device, shown on the left, comprises an inner slide rail 45 and an outer slide rail 46 having upper and lower rows of ball bearings 47, 48 which roll between respective flanges of the inner and outer slide rails as in the vibration isolator device. The locking device (not seen), which is substantially identical to the locking device 33 at the left hand end of Figure 3, is provided to lock the two slide rails 45, 46 together at any selected position in which a pin (similar to pin 35) engages in a selected one of a number of apertures in the inner slide rail. In the arrangement illustrated, by way of example, in the drawings the outer slide rail 46 of the position-adjustment device is secured by any suitable coupling means to the inner slide rail 15 of the vibration-isolator device. Accordingly, when fitting the combined device to a seat, the inner slide rail 45 of the position-adjustment device is secured to part of the vehicle and the outer slide rail 16 of the vibration isolator device is secured to part of the seat.

It will be apparent that if the vibration-isolator device is provided on only one side of the seat, and combined with a position-adjustment device as described above the opposite side of the seat need only be supplied with a simple slide rail assembly as hereinbefore described without either a vibration-isolator assembly or a locking device. It will be apparent that this combination can serve to reduce substantially the height of the seat suspension below that shown in Figure 1 by avoiding the use of the separate position-adjustment slide rails 13 shown in Figures 1 and 2.

## Claims

1. A vehicle-seat vibration-isolator device characterised by an inner slide rail (15), an outer slide rail (16) which embraces the inner slide rail, rows of rotary bearings (18) arranged to roll on guide paths on opposite sides of the device (which opposite sides are upper and lower sides when the device is in use) between parallel-spaced portions (15a, 16a) of the inner and outer slide rails, and a vibration-isolator assembly (19) comprising a first or intermediate support member (21) secured to a first one (15) of said slide rails, second and third outer support members (22) secured to the second (16) of said rails, on opposite sides of said intermediate support member, a rod (23) extending parallel to said rails through said intermediate support member, said second and third outer support members (22) secured to and supporting opposite ends of said rod, and two spring devices (25, 28) disposed around the rod and located respectively between the outer support members (22) and the intermediate support member (21) and acting to oppose resiliently movement of the respective outer support members (22) in a direction towards the intermediate support member (21).

2. A device accordiong to claim 1 characterised in that each said spring device comprises a helical spring (28) surrounding said rod and a resilient buffer member (25).

3. A device according to claim 2 characterised in that the helical spring (28) and buffer member (25) on each side of the intermediate support (21) act in series and means are provided for limiting the compression of the helical spring.

4. A device according to claim 3 characterised in that the means for limiting the compression of the helical spring comprises a collar (30) surrounding the rod and arranged to transmit load through the buffer member (25) between the outer and intermediate support members when the helical spring (28) has reached its compression limit.

5. A device according to any preceding claim further characterised by a fore-aft position-adjustment device comprising a second inner slide rail (45), a second outer slide rail (46) which embraces the second inner slide rail, rotary bearings (47, 48) arranged to roll on guide paths on opposite sides of the second inner slide rail and on opposite sides of the second outer slide rail, coupling means rigidly securing one of said second slide rails to one of the first-mentioned slide rails in parallel relationship to one another, and locking means for locking said second slide rails to each other in any selected one of a plurality of predetermined positions of one of the second slide rails relative to the other.

6. A device according to claim 5 characterised in that said locking means comprise a plurality of apertures spaced apart along one of said second slide rails and a pin slidably mounted on the other of said second slide rails for movement perpendicular to the length of the slide rails into and out of any selected one of said apertures.

7. A device according to any preceding claim characterised in that the distance between the two opposite sides of the device in a longitudinal plane through the rows of bearings is substantially greater than the distance between the other two sides of the device in a longitudinal plane perpendicular to the first plane.

## Patentansprüche

1. Fahrzeugsitzschwingungsdämpfungsvorrichtung, gekennzeichnet durch eine innere Gleitschiene (15), durch eine die innere Gleitschiene umgreifende äußere Gleitschiene (16), durch Reihen von Wälzkörpern (18), welche so angeordnet sind, daß sie auf an einander gegenüberliegenden Seiten der Vorrichtung (wobei die einander gegenüberliegenden Seiten im Gebrauch der Vorrichtung obere und untere Seiten sind) zwischen parallel beabstandeten Teilen (15a, 16a) der inneren und der äußeren Gleitschiene ausgebildeten Führungsbahnen abrollen, und durch eine Schwingungsdämpfungseinrichtung (19), mit einem an einer Ersten (15) der Gleitschienen befestigten ersten oder mittleren Tragteil (21), an einander gegenüberliegenden Seiten des mittleren Tragteils an der Zweiten (16) der Gleitschienen befestigten zweiten und dritten, äußeren Tragteilen (22), einer sich parallel zu den Schienen durch das mittlere Tragteil hindurch erstreckenden Stange (23), welche mit ihren gegenüberliegenden Enden am zweiten und dritten Tragteil befestigt und von diesen getragen ist, und mit zwei jeweils zwischen einem äußeren Tragteil (22) und dem mittleren Tragteil (21) die Stange umgebenden Federanordnungen (25, 28), welche einer Bewegung des jeweiligen äußeren Tragteils (22) in Richtung zum mittleren Tragteil (21) elastisch entgegenwirken.

2. Vorrichtung nach Anspruch 1, dadurch gekennzeichnet, daß jede Federanordnung eine die Stange umgebende Schraubenfeder (28) und ein elastisches Pufferglied (25) aufweist.

3. Vorrichtung nach Anspruch 2, dadurch gekennzeichnet, daß die Schraubenfeder (28) und das Pufferglied (25) an jeder Seite des mittleren Tragteils (21) in Reihenanordnung wirksam sind und daß Einrichtungen zum Begrenzen der Kompression der Schraubenfeder vorgesehen sind.

4. Vorrichtung nach Anspruch 3, dadurch gekennzeichnet, daß die Einrichtung zum Begrenzen der Kompression der Schraubenfeder eine die Stange umgebende Muffe (30) aufweist, welche so angeordnet ist, daß sie bei Erreichen der Kompressionsgrenze der Schraubenfeder (28) Belastungen zwischen dem mittleren und einem äußeren Tragteil über das Pufferglied (25) überträgt.

5. Vorrichtung nach einem der vorstehenden Ansprüche, ferner gekennzeichnet durch eine Vorwärts-Rückwärts-Verstelleinrichtung mit einer zweiten inneren Gleitschiene (45) einer die zweite innere Gleitschiene umgreifenden zweiten äußeren Gleitschiene (46), Wälzkörpern (47, 48), welche so angeordnet sind, daß sie auf an einander gegenüberliegenden Seiten der zweiten inneren Gleitschiene und der zweiten äußeren Gleitschiene ausgebildeten Führungsbahnen abrollen, einer Verbindungseinrichtung, welche eine der zweiten Gleitschienen starr und parallel zu dieser mit einer der zuerst genannten Gleitschienen verbindet, und mit einer Arretiereinrichtung zum Verriegeln der zweiten Gleitschienen miteinander in einer Ausgewählten von einer Anzahl von vorbestimmten Stellungen einer der zweiten Gleitschienen relativ zur anderen.

6. Vorrichtung nach Anspruch 5, dadurch gekennzeichnet, daß die Arretiereinrichtung eine Anzahl von in gegenseitigem Abstand entlang einer der zweiten Gleitschienen ausgebildeten Öffnungen und einen gleitend an der anderen zweiten Gleitschiene geführten Bolzen aufweist, welcher quer zur Längserstreckung der Gleitschienen in eine und aus einer jeweils ausgewählten Öffnung bewegbar ist.

7. Vorrichtung nach einem der vorstehenden Ansprüche, dadurch gekennzeichnet, daß der Abstand zwischen den beiden gegenüberliegenden Seiten der Vorrichtung in einer durch die Reihen der Wälzkörper verlaufenden Längsebene beträchtlich größer ist als der Abstand zwischen den anderen beiden Seiten der Vorrichtung in einer zur ersten Ebene lotrechten Längsebene.

**Revendications**

1. Dispositif d'amortissement de vibrations pour siège de véhicule, caractérisé par un rail interne (15) de glissière, un rail externe (16) de glissière qui entoure le rail interne de glissière, des lignes d'organes rotatifs de portée (18) destinés à rouler sur des trajets de guidage formés sur des côtés opposés du dispositif (les côtés opposés étant les côtés supérieur et inférieur lorsque le dispositif est utilisé) entre des parties parallèles espacées (15a, 16a) des rails interne et externe, et un ensemble (19) d'amortissement de vibrations comprenant un premier organe ou organe intemédiaire de support (21) fixé à un premier (15) des rails de glissière, un second et un troisième organe externe (22) de support fixés au second (16) des rails, de part et d'autre de l'organe intermédiaire de support, une tige (23) disposée parallèlement aux rails et passant à travers l'organe intermédiaire de support, le second et le troisième organe externe (22) de support étant fixés aux extrémités opposées de la tige et supportant ces extrémités, et deux dispositifs à ressort (25, 28) disposés autour de la tige et positionnés entre les organes externes (22) et l'organe intermédiaire (21) de support et dont l'action s'oppose élastiquement au déplacement des organes externes respectifs (22) de support vers l'organe intermédiaire (21) de support.

2. Dispositif selon la revendication 1, caractérisé en ce que chaque dispositif à ressort comporte un ressort hélicoïdal (28) entourant la tige et un organe élastique (25) formant un tampon.

3. Dispositif selon la revendication 2, caractérisé en ce que le ressort hélicoïdal (28) et l'organe formant un tampon (25), de chaque côté du support intermédiaire (21), agissent en série, et un dispositif est destiné à limiter la compression du ressort hélicoïdal.

4. Dispositif selon la revendication 3, caractérisé en ce que le dispositif destiné à limiter la compression du ressort hélicoïdal comprend un collier (30) entourant la tige et destiné à transmettre une force par l'intermédiaire de l'organe formant tampon (25) entre les organes externe et intermédiaire de support lorsque le ressort hélicoïdal (28) a atteint sa limite de compression.

5. Dispositif selon l'une quelconque des revendications précédentes, caractérisé en outre par un dispositif de réglage de position dans la direction avant-arrière, comprenant un second rail interne (45) de glissière, un second rail externe (46) de glissière qui entoure le second rail interne de glissière, des organes rotatifs de portée (47, 48) disposés de manière qu'ils roulent sur des trajets de guidage formés sur des côtés opposés du second rail interne de glissière et sur des côtés opposés du second rail externe de glissière, un dispositif d'accouplement assurant la fixation rigide de l'un des seconds rails de glissière sur l'un des premiers rails de glissière, parallèlement l'un à l'autre, et un dispositif de blocage des seconds rails de glissière l'un par rapport à l'autre dans une position quelconque choisie parmi plusieurs positions prédéterminées de l'un des seconds rails de glissière par rapport à l'autre.

6. Dispositif selon la revendication 5, caractérisé en ce que le dispositif de blocage comporte plusieurs ouvertures espacées le long de l'un des seconds rails de glissière et un axe qui peut coulisser sur l'autre des seconds rails de glissière afin qu'il se déplace perpendiculairement à la longueur des rails de glissière et qu'il puisse pénétrer dans une ouverture quelconque choisie parmi lesdites ouvertures et en sortir.

7. Dispositif selon l'une quelconque des revendications précédentes, caractérisé en ce que la distance comprise entre les deux côtés opposé du dispositif dans un plan longitudinal passant par les lignes d'organes de portée est sensiblement supérieure à la distance comprise entre les deux autres côtés du dispositif dans un plan longitudinal perpendiculaire au premier plan.

FIG.I.

Fig.2.

10  11  12  13  14

Fig.3.

Fig.4.

Fig.5.

Fig.6.

Fig.7.